Europäisches Patentamt

European Patent Office

Office européen des brevets

(11) Numéro de publication :

**0 082 129**
**A1**

(12) **DEMANDE DE BREVET EUROPEEN**

(21) Numéro de dépôt: **82870070.8**

(22) Date de dépôt: **03.12.82**

(51) Int. Cl.³: **B 65 G 1/08,** B 65 G 67/02,
B 60 P 3/00

(30) Priorité: 04.12.81 BE 206737
23.12.81 BE 206915
18.03.82 BE 207595

(43) Date de publication de la demande: **22.06.83**
**Bulletin 83/25**

(84) Etats contractants désignés: **BE DE FR GB LU NL**

(71) Demandeur: **Delhaye, Guy Léon, rue des**
**Egyptiens, 10 Boîte 4, B-1050 Bruxelles (BE)**

(72) Inventeur: **Delhaye, Guy Léon, rue des**
**Egyptiens, 10 Boîte 4, B-1050 Bruxelles (BE)**

(74) Mandataire: **Thirion, Robert et al, Bureau GEVERS**
**S.A. 7, rue de Livourne Bte 1, B-1050 Bruxelles (BE)**

(54) **Dispositif pour le stockage, le transport et la manutention d'objets cylindriques.**

㊷ Dispositif (1) pour le stockage, le transport et la manutention d'objets cylindriques (2) lourds de mêmes dimensions comprenant un bâti (3), au moins une ouverture d'entrée (4) des objets, un à un, dans le bâti avec leur axe sensiblement parallèle à la base (5) de l'ouverture (4), un orifice de sortie (6) si- tué à un niveau inférieur à celui de l'ouverture d'entrée (4), un chemin de roulement (7) s'étendant depuis l'ouverture d'entrée (4) jusqu'à l'orifice de sortie (6) et sur lequel les objets se déplacent l'un à la suite de l'autre par gravité, des moyens (8) et (10) pour immobiliser les objets en amont de l'orifice de sortie (6).

"Dispositif pour le stockage, le transport et la manutention d'objets cylindriques"

La présente invention a pour objet un dispositif
pour le stockage, le transport et la manutention d'objets
cylindriques lourds de mêmes dimensions, en particulier
des fûts, bonbonnes, etc...

Jusqu'à présent en cours de stockage et de
transport, les fûts, bonbonnes, etc...., sont généralement disposés, pour des raisons de stabilité, de manière
à reposer sur une de leurs bases. Principalement, au
cours du transport, il est nécessaire de prévoir un
arrimage, par exemple à l'aide de ridelles, d'un groupe
de fûts disposés sur un niveau. Lorsque l'on désire
transporter  des fûts disposés en deux ou plusieurs niveaux superposés, les problèmes d'arrimage sont très
difficiles à résoudre et les arrimages que l'on peut
réaliser, s'ils peuvent résister à des conditions idéales de transport, sont bien souvent peu fiables lors
d'incidents, tels que freinage brutal, chocs provoqués
par des défectuosités des voies de roulement, etc...,
ou d'accidents de circulation et peuvent faire courir
des risques sérieux au moyen de transport utilisé et
à l'entourage de celui-ci, par  éboulement et dispersement de la cargaison. De plus, le chargement et le
déchargement des fûts, surtout lorsqu'il est manuel, est non seulement très pénible mais est bien souvent la cause d'accidents.

L'invention a pour but de remédier à ces inconvénients et de procurer un dispositif dans lequel les fûts, bonbonnes, etc... sont stockés pour que leur axe soit sensiblement horizontal. Les fûts renfermés dans ce dispositif présentent l'avantage d'être parfaitement immobilisés les uns par rapport aux autres de sorte que, lorsque des dispositifs sont placés, pour le transport des fûts, sur le plateau de chargement d'un engin de transport, il ne faut pas se préoccuper de l'arrimage individuel des fûts mais uniquement de l'arrimage des dispositifs contenant les fûts. Dans la plupart des cas, comme chacun des dispositifs suivant l'invention contient un nombre important de fûts, cet arrimage des dispositifs sur l'engin de transport n'est même pas nécessaire du fait que ceux-ci sont suffisamment stable grâce à leur poids et, dans le cas contraire, cet arrimage est, suivant l'invention, aisé, rapide et exempt de tout risque. Suivant l'invention, le ou les dispositifs susdits peuvent aussi être fixés à demeure sur l'engin de transport, ce qui permet, dans ce cas, de supprimer toutes les opérations d'arrimage des fûts et des dispositifs qui les contiennent. Au niveau de la manutention, le dispositif suivant l'invention présente l'énorme avantage de simplifier considérablement les opérations de chargement et de déchargement des fûts en supprimant le déplacement et le positionnement de chacun des fûts, ceux-ci pouvant être d'une part, introduits dans chacun des dispositifs, en un endroit fixe bien déterminé et facilement accessible, pour se placer automatiquement en position voulue et d'autre part, extraits du dispositif soit un à un, soit en série , en un autre endroit fixe, bien déterminé et facilement accessible, en regard duquel les fûts se présentent automatiquement. Le dispositif suivant l'invention présente encore l'avantage d'être suffisamment léger par rapport aux fûts qu'il contient et d'un encombrement suffisamment réduit pour ne pas réduire de façon sensible la capacité de transport en fûts de l'engin de transport.

A cet effet, suivant l'invention, ledit dispositif comprend un bâti présentant au moins une ouverture d'entrée agencée pour permettre l'introduction des objets, un à un , dans le bâti avec leur axe sensiblement parallèle à la base de l'ouverture, un orifice de sortie agencé pour permettre d'extraire, un à un les objets du bâti et situé à un niveau inférieur à celui de l'ouverture d'entrée, un chemin de roulement s'étendant depuis l'ouverture d'entrée jusqu'à l'orifice de sortie et sur lequel les objets se déplacent l'un à la suite de l'autre par gravité, des moyens pour immobiliser , en amont de l'orifice de sortie, un objet atteignant l'extrémité inférieure du chemin de roulement et des moyens, commandés par cet objet immobilisé à l'extrémité inférieure dudit chemin de roulement, pour immobiliser et maintenir à distance de cet objet les objets situés en amont de ce dernier sur le chemin de roulement.

Suivant une forme de réalisation avantageuse du dispositif suivant l'invention, celui-ci comprend, disposés sur le bâti et en regard de l'ouverture d'entrée susdite, des moyens mobiles agencés pour autoriser l'introduction des objets dans le bâti et pour empêcher la sortie de ces derniers par ladite ouverture d'entrée.

Suivant un mode de réalisation particulièrement avantageux de l'invention, l'ouverture d'entrée et l'orifice de sortie sont superposés et situés sensiblement dans le même plan, le chemin de roulement réunissant ces ouverture et orifice formant un coude, des moyens étant prévus dans ce coude pour amortir les chocs provoqués par le changement de direction des objets se déplaçant sur le chemin de roulement et pour freiner lesdits objets lors de ce changement de direction.

D'autres détails et particularités de l'invention ressortiront de la description des dessins annexés au présent mémoire et qui représentent, à titre d'exemples non limitatifs, des formes de réalisation particulières du dispositif suivant l'invention.

La figure 1 est une vue schématique en élévation d'un camion chargé d'une batterie de dispositifs suivant l'invention.

La figure 2 est une vue schématique, à plus grande échelle que celle de la figure, suivant la ligne II-II de la figure 1.

Les figures 3 et 4 sont des vues partielles, en perspective, montrant des détails du dispositif illustré aux figures 1 et 2.

Les figures 5 et 6 dont des vues analogues à la figure 2 et illustrent deux variantes du dispositif représenté aux figures 1 à 4.

La figure 7 est une vue en élévation d'une autre variante du dispositif suivant l'invention.

La figure 8 est une vue en coupe suivant la ligne VIII-VIII de la figure 7.

Dans les différentes figures, les mêmes notations de référence désignent des éléments identiques ou analogues.

Le dispositif 1 suivant l'invention et représenté aux dessins est destiné à permettre le stockage, le transport et la manutention d'objets cylindriques 2, lourds et de mêmes dimensions , et en particulier des fûts, bonbonnes, etc... Ce dispositif comprend un bâti 3 présentant une ouverture d'entrée 4 agencée pour permettre l'introduction des fûts 2, un à un, dans le bâti 3 de manière à ce que leur axe soit sensiblement parallèle à la base 5 de l'ouverture 4 qui est de préférence sensiblement horizontal, un orifice de sortie 6 agencé pour permettre d'extraire, un à un les fûts 2 du bâti et situé à un niveau inférieur à celui de l'ouverture d'entrée 4, un chemin de roulement 7 s'étendant depuis l'ouverture d'entrée 4 jusqu'à l'orifice de sortie 6 et sur lequel les fûts se déplacent, l'un à la suite de l'autre, par gravité, des moyens 8 pour immobiliser, en amont de l'orifice de sortie 6, un fût 2 atteignant l'extrémité inférieure 9 du chemin de roulement 7 et des moyens 10, commandés par ce fût 2 immobilisé à l'extrémité inférieure du chemin de roulement pour immobiliser et maintenir à distance de ce fût les fûts situés en amont de ce dernier sur le chemin de roulement 7.

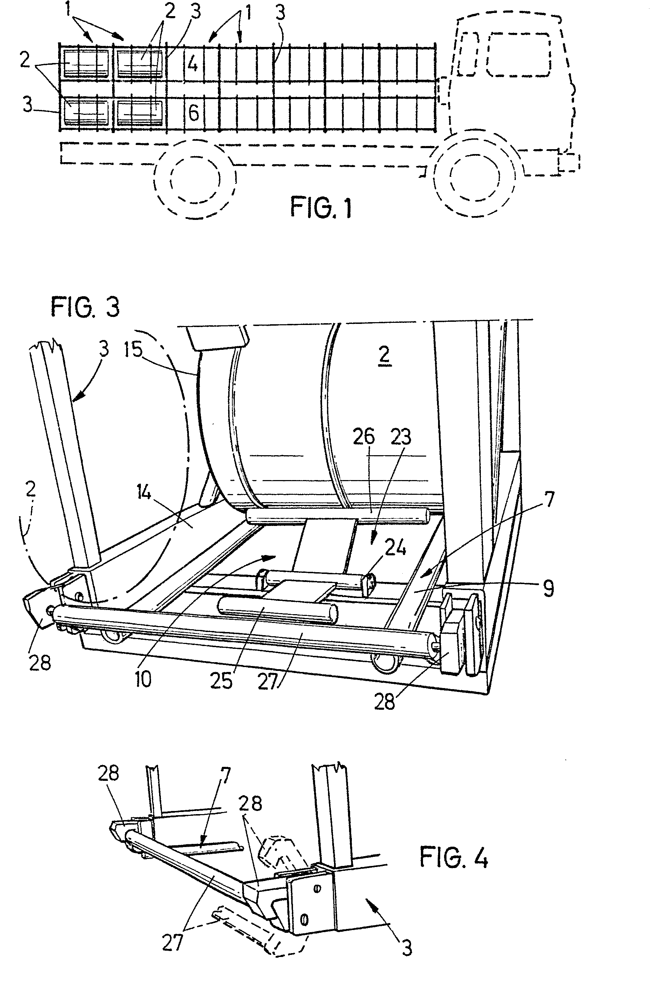

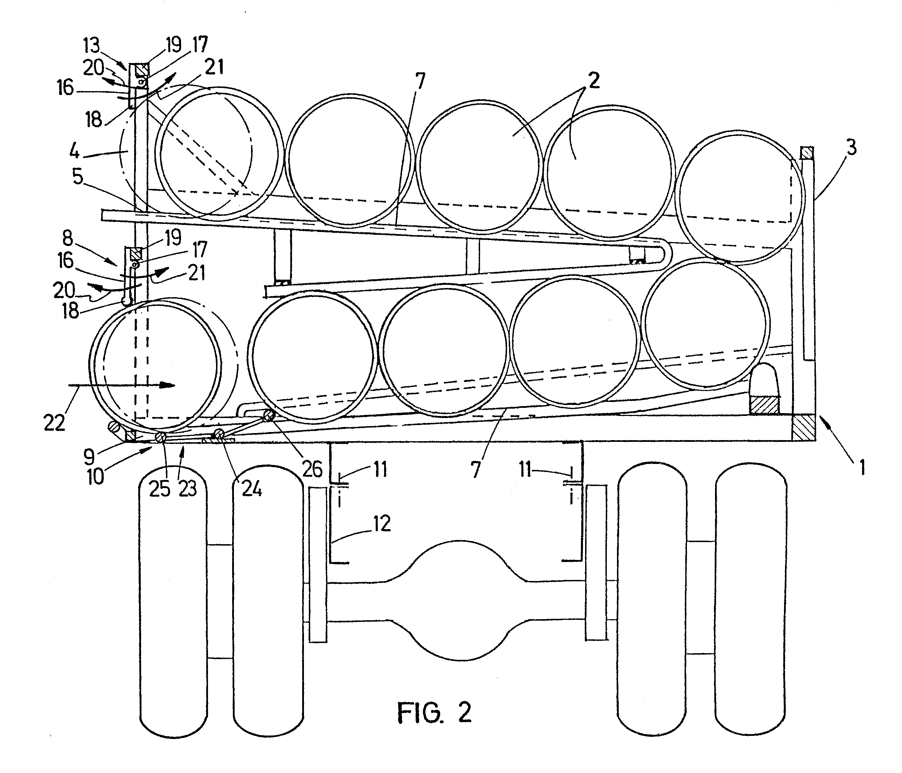

Les dispositifs 1 sont destinés , par exemple et comme montré à la figure 1, à être disposés en batterie sur un véhicule routier. Ces dispositifs peuvent être, soit maintenus en place sur le plateau de chargement sous l'effet de leur propre poids et celui de leur contenu, soit fixés entre eux ou encore directement, comme montré à la figure 2, en 11, sur le châssis 12 du véhicule.

Les dispositifs pourraient également être superposés sur deux ou plusieurs niveaux. C'est pourquoi, le bâti 3 du dispositif est avantageusement agencé pour permettre la superposition et la juxtaposition des dispositifs, ce bâti comprenant des moyens non représentés, tels que pattes d'assemblage coopérant avec des goujons, pour permettre la fixation du dispositif sur un support et des dispositifs entre eux, ces pattes d'assemblage pouvant être utilisées pour faciliter la manoeuvre des dispositifs à l'aide d'un engin de levage.

Pour éviter que le ou les fûts 2 situés à proximité de l'ouverture d'entrée 4 soient projetés à travers cette ouverture en cours de transport du dispositif, celui-ci comprend des moyens mobiles 13, disposés sur le bâti et en regard de l'ouverture 4, agencés pour autoriser l'introduction des fûts 2 dans le bâti et pour s'opposer à la sortie desdits fûts par l'ouverture 4, de sorte qu'un fût introduit dans le dispositif ne peut être extrait de celui-ci que par l'orifice de sortie 6. Pour que les fûts 2 puissent se déplacer correctement sur le chemin de roulement 7, sans coincement, le bâti est avantageusement pourvu de moyens de guidage 14 coopérant avec les bases 15 des fûts pour que les axes de ces derniers soient maintenus sensiblement perpendiculairement au chemin de roulement 7 pendant le trajet des fûts sur ce dernier.

Les moyens 8 susdits comprennent, pour immobiliser un fût 2 en amont de l'orifice 6 et à l'extrémité 9 du chemin de roulement 7, un organe mobile 16 articulé, autour d'un axe 17 parallèle à l'axe des fûts 2, le long du bord supérieur de l'orifice de sortie 6. Cet organe est dirigé vers le chemin de roulement 7 de manière à s'étendre à travers ledit orifice 6, la distance séparant le chemin de roulement de l'extrémité libre 18 de cet organe 16, la plus proche dudit chemin de roulement, étant inférieure au diamètre d'un fût 2. Une butée 19 est prévue sur le bâti 3 pour coopérer avec ledit organe 16 afin de s'opposer au mouvement de rotation de ce dernier vers l'extérieur du bâti, suivant la flèche 20 (figure 2), pour bloquer le fût situé en regard de l'orifice 6 et autorise son mouvement vers l'intérieur du bâti, suivant la flèche 21, quand une pression est exercée sur l'organe, dans le sens de cette flèche 21, en vue du dégagement du fût situé à la partie inférieure du chemin de roulement . L'organe 16 est en outre agencé, par exemple par son propre poids ou sous l'action d'un ressort , pour s'appuyer automatiquement contre la butée 19 quand une pression dirigée suivant la flèche 21 n'est pas exercée sur ledit organe. Les moyens mobiles 13 susdits sont identiques aux moyens 8, le fût présenté à l'ouverture 4 exerçant une pression sur ces moyens suivant la flèche 21 de sorte que ceux-ci s'éclipsent vers l'intérieur du bâti pour autoriser l'introduction du fût dans le bâti. Immédiatement après le passage du fût, ces moyens 13 reprennent automatiquement leur position initiale contre la butée 19 et s'opposent à toute sortie, à travers l'ouverture 4, des fûts introduits dans le dispositif.

Pour permettre le mouvement de l'organe 16 vers l'intérieur du bâti en vue du dégagement d'un fût, il faut pouvoir déplacer légèrement le fût 2 en regard de l'orifice 6 suivant la flèche 22 (figure 2). C'est pourquoi les moyens 10 sont prévus afin de maintenir un espace entre le fût susdit et les fûts situés en amont sur le chemin de roulement 7, de sorte que, lors du déplacement du fût considéré, ce déplacement n'entraîne pas automatiquement celui des fûts situés en amont. Les moyens 10, immobilisant et maintenant à distance du fût immobilisé à l'extrémité inférieure 9 du chemin de roulement les fûts situés en amont, sont constitués par un balancier 23, articulé sur le bâti autour d'un axe 24 parallèle aux axes des fûts disposés sur le chemin de roulement et situé à un niveau inférieur à celui de ce dernier, comprenant, de part et d'autre de cet axe, un élément 25, 26 s'étendant transversalement par rapport au chemin de roulement, ces éléments étant agencés pour que l'élément 26 le plus éloigné de l'orifice de sortie 6 soit automatiquement situé, en l'absence d'objet sur le chemin de roulement, en dessous du niveau de ce chemin de roulement 7 tandis que l'élément 25 du balancier le plus proche de l'orifice de sortie 6 fait saillie par rapport à ce chemin de roulement, ces éléments étant en outre agencés pour que l'élément 26 le plus éloigné de l'orifice de sortie bascule automatiquement pour se mettre en travers du chemin de roulement 7, lorsqu'un fût prend appui sur l'élément 25 le plus proche dudit orifice, pour immobiliser les fûts suivants, la distance séparant ces deux éléments 25 et 26 étant telle qu'un espace subsiste entre le fût le plus proche de l'orifice de sortie 6 est le fût qui le suit, cet espace étant calculé de manière à autoriser le mouvement de l'organe 16 suivant la flèche 21.

Pour permettre un déchargement en série des fûts du dispositif, en particulier des fûts vides, l'axe 24 du balancier 23 peut être monté sur un support mobile agencé pour permettre d'écarter le balancier 23 du chemin de roulement 7 afin de rendre ce dernier inopérant. Il suffit alors d'éclipser l'organe 16 vers l'intérieur du bâti et de rendre inopérant le balancier 23 pour que le dispositif se vide automatiquement des fûts qu'il contient.

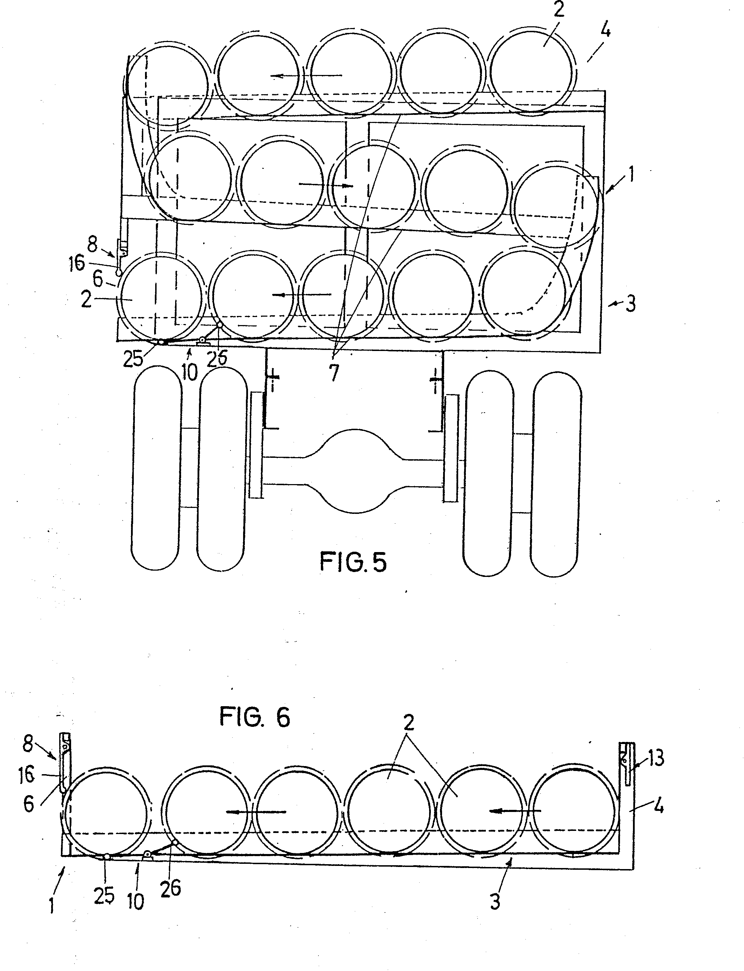

Pour faciliter la manutention du fût en voie d'extraction du dispositif, celui-ci peut comprendre, en aval de l'extrémité inférieure 9 du chemin de roulement et de l'orifice 6, un arrêt fixe 27 situé à un niveau supérieur à celui de cette extrémité 9. La distance séparant cet arrêt 27 de cette dernière est telle qu'un fût libéré du dispositif agit toujours sur le balancier 23 et s'immobilise sur le chemin de roulement 7 et contre l'arrêt 27, position dans laquelle il peut être très facilement pris en charge manuellement. Cet arrêt 27 est maintenu en place, comme montré à la figure 4, par des crochets 28, une rotation de ces crochets permettant d'éclipser l'arrêt 27 lors du déchargement en série des fûts.

Comme illustré aux dessins, le dispositif peut être équipé pour contenir soit une rangée de fûts, soit plusieurs rangées. L'ouverture 4 et l'orifice 6 du dispositif peuvent, quand ce dernier peut contenir plusieurs rangées de fûts, être situées soit du même côté du dispositif, soit sur des côtés opposés de ce dernier.

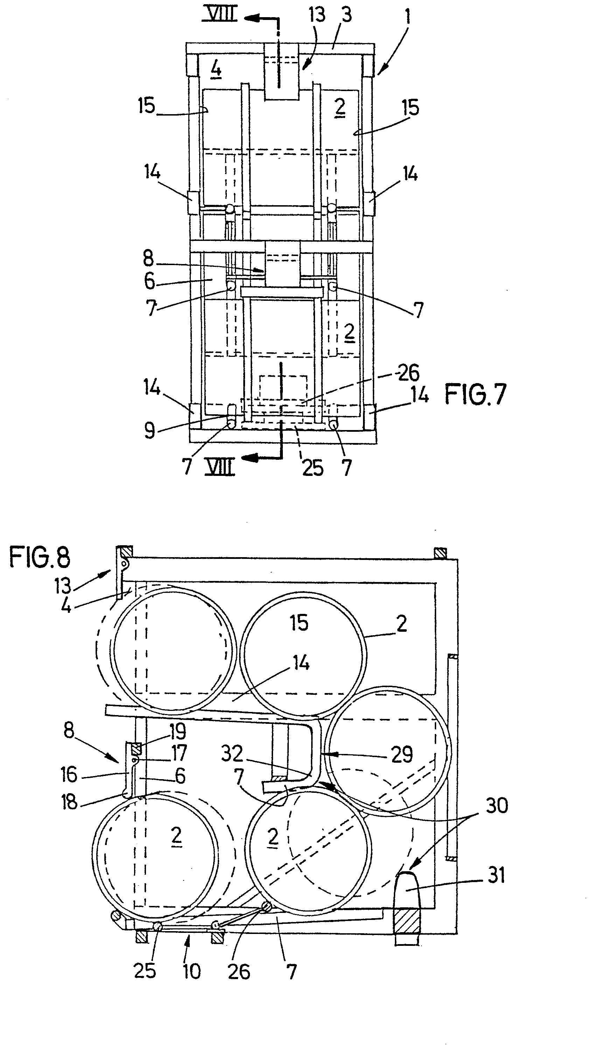

La forme de réalisation représentée aux figures 7 et 8 est particulièrement avantageuse pour la livraison en détail des fûts. En effet, elle permet de placer dos à dos et en deux rangées les dispositifs sur un véhicule de sorte que les fûts peuvent toujours être déchargés à partir d'un trottoir. L'ouverture 4 et l'orifice 6 sont superposés et situés dans un même plan sensiblement vertical, le chemin de roulement 7 formant en coude 29. Quand les fûts sont pleins, ils peuvent ainsi être déchargés par l'orifice 6 à une hauteur idéale pour le manutentionnaire, tandis que les fûts vides peuvent être aisément introduits par ce dernier dans le dispositif, à travers l'ouverture 4. Pour éviter des chocs et des accélérations lors du passage des fûts dans le coude 29,le dispositif comprend avantageusement des moyens 30 constitués, par exemple, par un amortisseur 31 absorbant les chocs dus à la chute des fûts 2 dans le coude et par une boucle 32, présentée par le chemin de roulement 7, coopérant avec l'amortisseur 31 pour freiner les fûts par frottement de ces derniers sur l'amortisseur et la boucle susdite.

Il doit être entendu que l'invention n'est nullement limitée aux formes de réalisation décrites et que bien des modifications peuvent être apportées à ces dernières sans sortir du cadre du présent brevet.

<u>REVENDICATIONS</u>

1. Dispositif (1) pour le stockage, le transport et la manutention d'objets cylindriques (2) lourds de mêmes dimensions, en particulier des fûts , bonbonnes, etc..., caractérisé en ce qu'il comprend un bâti (3) présentant au moins une ouverture d'entrée (4) agencée pour permettre l'introduction des objets, un à un, dans le bâti avec leur axe sensiblement parallèle à la base (5) de l'ouverture (4), un orifice de sortie (6) agencé pour permettre d'extraire, un à un, les objets (2) du bâti (3) et situé à un niveau inférieur à celui de l'ouverture d'entrée (4), un chemin de roulement (7) s'étendant depuis l'ouverture d'entrée (4) jusqu'à l'orifice de sortie (6) et sur lequel les objets se déplacent l'un à la suite de l'autre par gravité , des moyens (8) pour immobiliser, en amont de l'orifice de sortie (6) , un objet (2) atteignant l'extrémité inférieure (9) du chemin de roulement (7) et des moyens (10), commandés par cet objet immobilisé à l'extrémité inférieure dudit chemin de roulement, pour immobiliser et maintenir à distance de cet objet les objets situés en amont de ce dernier sur le chemin de roulement (7).

2. Dispositif suivant la revendication 1, caractérisé en ce qu'il comprend, disposés sur le bâti (3) et en regard de l'ouverture d'entrée (4), des moyens mobiles (13) agencés pour autoriser l'introduction des objets (2) dans le bâti (3) et pour empêcher la sortie de ces derniers par ladite ouverture d'entrée (4).

3. Dispositif suivant l'une ou l'autre des revendications 1 et 2, caractérisé en ce que le bâti (3) comprend des moyens de guidage (14) des objets (2) agencés pour coopérer avec au moins une des bases (15) de ces derniers.

4. Dispositif suivant l'une quelconque des revendications 1 à 3, caractérisé en ce que les moyens (8) pour immobiliser un objet (2), en amont de l'orifice de sortie (6) et à l'extrémité inférieure du chemin de roulement, comprennent un organe mobile (16) articulé, autour d'un axe (17) parallèle à l'axe des objets situés sur le chemin de roulement, le long du bord supérieur de l'orifice de sortie (6) et dirigé vers le chemin de roulement (7) de manière à s'étendre à travers cet orifice (6), la distance séparant le chemin de roulement (7) de l'extrémité libre (18) de cet organe, la plus proche dudit chemin de roulement, étant inférieure au diamètre d'un objet, une butée (19) étant prévue sur le bâti pour coopérer avec l'organe (16) afin de s'opposer au mouvement de rotation de ce dernier vers l'extérieur du bâti et autoriser son mouvement vers l'intérieur de ce dernier, l'organe (16) étant en outre agencé pour s'appuyer automatiquement contre la butée (19) quand une pression, dirigée vers l'intérieur du bâti, n'est pas exercée sur cet organe (16).

5. Dispositif suivant l'une quelconque des revendications 1 à 4, caractérisé en ce que les moyens (10) immobilisant et maintenant à distance de l'objet (2) immobilisé à l'extrémité inférieure (9) du chemin de roulement les objets situés en amont sont constitués par un balancier (23), articulé sur le bâti (3) autour d'un axe (24) parallèle aux axes des objets disposés sur le chemin de roulement et situé à un niveau inférieur à celui de ce dernier , comprenant, de part et d'autre de cet axe , un élément (25, 26) s'étendant transversalement par rapport au chemin de roulement , ces éléments étant agencés pour que l'élément (26) le plus éloigné de l'orifice de sortie soit automatiquement situé, en l'absence d'objet (2) sur le chemin de roulement (7), en dessous du niveau de ce chemin de roulement, tandis que l'élément (25) du balancier le plus proche de l'orifice de sortie (6) fait saillie par rapport à ce chemin de roulement, ces éléments étant en outre agencés pour que l'élément (26) le plus éloigné de l'orifice de sortie bascule pour se mettre en travers du chemin de roulement, lorsqu'un objet (2) prend appui sur l'élément (25) le plus proche dudit orifice, pour immobiliser les objets suivants, la distance séparant ces deux éléments (25, 26) étant telle qu'un espace subsiste entre l'objet le plus proche de l'orifice de sortie et l'objet qui le suit.

6. Dispositif suivant la revendication 5, caractérisé en ce que l'articulation du balancier est montée sur un support mobile agencé pour permettre d'écarter le balancier (23) du chemin de roulement (7) afin de le rendre inopérant.

7. Dispositif suivant l'une quelconque des revendications 1 à 6, caractérisé en ce qu'il comprend en aval de l'orifice de sortie (6) et de l'extrémité inférieure (9) du chemin de roulement, un arrêt fixe et éclipsable (27) s'étendant transversalement audit chemin de roulement et situé à un niveau supérieur à celui de cette extrémité, la distance séparant cet ar-

0082129

rêt de l'extrémité du chemin de roulement étant telle que l'objet en contact avec cet arrêt (27) repose sur le chemin de roulement (7).

8. Dispositif suivant l'une quelconque des revendications 1 à 7, caractérisé en ce que l'ouverture d'entrée (4) et l'orifice de sortie (6) sont superposés et situés sensiblement dans le même plan, le chemin de roulement (7) réunissant ces ouverture et orifice formant un coude (29), des moyens (30) étant prévus dans ce coude (29) pour amortir les chocs provoqués par le changement de direction des objets se déplaçant sur le chemin de roulement et pour freiner lesdits objets lors de ce changement de direction.

9. Dispositif suivant l'une quelconque des revendications 1 à 8, caractérisé en ce que le bâti (3) est agencé pour permettre la superposition et la juxtaposition des dispositifs, ledit bâti comprenant en outre des moyens agencés, d'une part, pour permettre la fixation du dispositif par rapport à un support et des dispositifs entre eux et, d'autre part, pour coopérer avec des engins de levage.

FIG.1

FIG. 3

FIG. 4

0082129

FIG. 2

3/4

0082129

FIG.5

FIG. 6

FIG.7

FIG.8

4/4

0082129

0082129

Office européen
des brevets

**RAPPORT DE RECHERCHE EUROPEENNE**

Numéro de la demande

EP 82 87 0070

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | B 65 G 1/08 |
| X,A | DE-A-2 622 582 (KOSAN CRISPLANT A/S) <br> * Page 5, ligne 4 - page 6, ligne 7 ; page 7, ligne 17 - page 8, ligne 31 ; figures 2-4 * | 1,3,4, 9 | B 65 G 67/02 <br> B 60 P 3/00 |
| | --- | | |
| X,A | US-A-1 985 739 (MURRAY) <br> * Page 1, colonne de droite, lignes 17-50 ; figures 1, 3 * | 1,8 | |
| | --- | | |
| A | GB-A- 784 658 (R.H. CORBETT & CO. LTD.) <br> * Figures 2, 3 * | 1,5 | |
| | --- | | |
| A | US-A-2 818 978 (POST) <br> * Colonne 2, ligne 57 - colonne 3, ligne 13 ; figures 2, 3 * | 2,3,7 | |
| | | | DOMAINES TECHNIQUES RECHERCHES (Int. Cl. ³) |
| | --- | | |
| A | US-A-2 755 950 (FORSHEY) <br> * Colonne 5, lignes 3-9 ; figures 8-10 * | 5 | B 60 P 3/00 <br> B 65 G 1/00 <br> B 65 G 67/00 |
| | --- | | |
| A | DD-A- 54 297 (BRANDT) <br> * Colonne 2, lignes 3-16 ; figure 1 * | 5 | |
| | --- | | |
| A | US-A-2 115 647 (ROSS) <br> * Figures 9-11 * | 7 | |
| | ----- | | |

Le présent rapport de recherche a été établi pour toutes les revendications

| Lieu de la recherche <br> BERLIN | Date d'achèvement de la recherche <br> 28-02-1983 | Examinateur <br> SIMON J J P |
|---|---|---|